# EUROPEAN PATENT APPLICATION

(11) **EP 4 694 055 A1**
(43) Date of publication of application: **11.02.2026**
(21) Application number: 24465556.9
(22) Date of filing: 09.08.2024
(51) Int. Cl.: H04L 41/069, H04L 41/14, H04L 43/062

(54) **A METHOD FOR MONITORING A COMMUNICATION BETWEEN AT LEAST TWO EDGE DEVICES OF AN EDGE SYSTEM VIA AN OPEN NETWORK PROTOCOL, A COMPUTER PROGRAM PRODUCT, A COMPUTER-READABLE STORAGE MEDIUM, AN ELECTRONIC COMPUTING DEVICE, AS WELL AS AN EDGE SYSTEM**

(71) Applicant: Siemens Aktiengesellschaft, 80333 München (DE)
(72) Inventor: The designation of the inventor has not yet been filed
(74) Representative: Siemens Patent Attorneys

(57) **Abstract**

The invention relates to a method for monitoring a communication between at least two edge devices (14, 16, 18, 20) of an edge system (10) via an open network protocol by an electronic computing device (12) of the edge system (10), comprising the steps of receiving a communication information (34, 36) of the communication between the at least two edge devices (14, 16, 18, 20) by the electronic computing device (12), analyzing the communication information (34, 36) depending on a context of the communication information (34, 36) by the electronic computing device (12), enriching the communication information (34, 36) with semantic data depending on the analyzation by the electronic computing device (12), and transmitting the enriched communication information (34, 36) to a storage device (30) of the edge system (10). Furthermore, the present invention relates to a computer program product, a computer-readable storage medium, an electronic computing device (12), as well as to an edge system (10).

## Description

The present invention relates to a method for monitoring a communication between at least two edge devices of an edge system via an open network protocol by an electronic computing device of the edge system according to pending claim 1. Furthermore, the present invention relates to a computer program product, a corresponding computer-readable storage medium, a corresponding electronic computing device, as well as to a corresponding edge system.

A so-called edge system is a complex distributed system that can overwhelm developers and operators with an "avalanche of errors" when an application malfunctions due to the numerous dependencies between applications running within the system. The open network protocol bus is a critical component of the edge system responsible for inter-application communication. Debugging issues related to the protocol bus is often a time-consuming and challenging process using only logs and metrics without context and semantic links across logs and metrics. There are numerous potential root causes that can further complicate the debugging process. Effective debugging is hindered by missing or insufficient data, irrelevant data that diverges attention, and the mental burden of switching between different debugging tools, such as monitoring and logging tools.

According to the state of the art, the observability of the network bus is limited. Based on logs and metrics, there is no intuitive view that supports an easy understanding of how applications collaborate to achieve complex use cases, and there is no guidance for the user from symptoms to root cause. Advanced human expertise is often needed, sometimes from multiple experts, to effectively debug issues related to the network bus. Instrumenting all applications using a standard like telemetry to make telemetry data flowing is not an option as it is too intrusive and decentralized because each application needs to be instrumented, which is especially difficult with legacy and third-party applications. Well-known tools for Application Performance Management (APM) from the cloud space are not applicable because of high cost, privacy concerns, and the network protocol being poorly supported out-of-the-box. There is further no turn-on/turn-off flexibility at runtime to select the appropriate level of granularity for telemetry data.

It is an object of the present invention to provide a method, a computer program product, a computer-readable storage medium, an electronic computing device, as well as an edge system, by which monitoring of a communication in the edge system is provided in an improved manner.

This object is solved by a method, a computer program product, a computer-readable storage medium, an electronic computing device, as well as an edge system according to the independent claims. Advantageous embodiments are presented in the dependent claims.

One aspect of the invention relates to a method for monitoring a communication between at least edge devices of an edge system via an open network protocol by an electronic computing device of the edge system. A communication information of the communication between the at least two edge devices is received by the electronic computing device. The communication information is analyzed depending on a context of the communication information by the electronic computing device. The communication information is enriched with semantic data depending on the analyzation by the electronic computing device and the enriched communication information is transmitted to a storage device of the edge system.

In particular, the edge system comprises more than two edge devices, for example three edge devices, four edge devices, or more than four edge devices. The approach of the method is not intrusive and does not require changes in the application code. It leverages data from existing sourcing, mainly application logs and message bus events. Non-intrusiveness is achieved through special semantic agents that continuously scan the application logs and the bus events. There is no on-demand activation and deactivation of telemetry level of detail at runtime, providing greater flexibility for users. In particular, an automation is provided for identifying issues and possible root causes.

The solution may also feature a user-friendly user interface that focuses on live and historical inter-application communication views, in which the communication concepts, such as communication topics, are first-class citizens. The solution focuses on relevant data for debugging, preserving context, when switching between graphs, logs, metrics, and other tools.

The proposed solution stands out because of its semantic agents, which use algorithms to derive relevant data from edge applications and the communication bus and provide the necessary context to semantically link the applications together. This linking is done in terms of who-talks-to-whom and who-depends-on-whom, allowing users to understand the relationship/dependencies between different components of the edge system.

Compared to manual or semi-manual instrumentation, such as using OpenTelemetry, the solution requires minimal effort and cost for all applications communicating over the network protocol. The solution is specifically designed for edge requirements and constraints, such as the network protocol communication, to ensure maximum efficiency.

A user can activate or deactivate the telemetry flow on demand at runtime, providing greater flexibility. Furthermore, a user can also control the level of detail, making the edge system more flexible and customizable. The solution is also user-friendly for all industrial users, including edge application developers and operators from both the IT and OT spaces.

According to an embodiment at least one application log of the edge device as the communication information is received. Therefore, the application log can be analyzed and in particular enriched with the semantic information.

In another embodiment at least one message bus event of the open network protocol as the communication information is received. Therefore, also message bus events at the network protocol bus can be received and analyzed. Furthermore, this information can then be enriched with semantic data in order to provide an improved monitoring of the communication.

In another embodiment the open network protocol is provided as an MQTT network. In particular, the MQTT protocol is a standardized protocol from machine-to-machine communication. It is designed for connections to remote locations that have devices with resources constraints or limited network bandwidth, such as in the internet of things (IoT). It runs over a transport protocol that provides ordered, loss-less, bi-directional connections.

According to another embodiment the communication information is analyzed with regard to at least one error of the communication. Therefore, an error in the communication can be analyzed and enriched with the semantic information. Therefore, an error in the communication can be stored and analyzed in an improved manner.

According to another embodiment a type of error is determined as the analyzation. For example a communication error or an error due to data loss or an error due to a crashed application, crashed broker, an incorrect topology, a fast publisher, a slow publisher, an incorrect behavior, a non-deterministic behavior or a performance bottleneck can be a type of error.

In another embodiment an origin of the error is determined as the analyzation. For example, as the origin one of the edge devices can be determined and therefore, the communication between these edge devices can be determined and therefore the communication between these edge devices can be monitored and analyzed in an improved manner. By adding the origin of the error an improved communication can be provided.

According to another embodiment a number of errors is determined as the analyzation. In particular, for example between the two edge devices a number of errors can be determined. For example, if a communication between two individual edge devices comprises a high amount of communication errors, this can be analyzed and for example countermeasures can be provided for this communication.

In another embodiment the communication information is analyzed regarding to an identification of the edge devices of the communication. In particular, it can be identified who communicates with whom and this can also be analyzed and enriched with semantic information in order to provide a robust communication inside the edge system.

According to another embodiment the communication information is analyzed concerning an amount of communication between the at least two edge devices of the communication. For example, if the two edge devices communicate in a high frequency, this can also be analyzed and semantically enriched. Furthermore, if the communication between the two edge devices is not high, this can also be provided as a semantically enriched communication.

In another embodiment additionally the communication information is structured. For example, unstructured communication information between the edge devices can now be structured and semantically enriched. This has the advantage, that for a further analyzation a structured and enriched communication information can be used.

In particular, the present invention is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

A still further aspect of the invention relates to an electronic computing device for monitoring a communication between at least two edge devices of an edge system via an open network protocol, wherein the electronic computing device is configured for performing a method according to the preceding aspect. In particular, the method is performed by the electronic computing device.

A still further aspect of the invention relates to an edge system, comprising at least two edge devices, one storing device, and at least one electronic computing device according to the preceding aspect of the invention.

Advantageous embodiments of the method are to be regarded as advantageous embodiments of the computer program product, the computer-readable storage medium, the electronic computing device, as well as the edge system. In particular, the electronic computing device as well as the edge system therefore comprises means for performing the method.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

Therein it is shown in:
- FIG 1: a schematic block diagram according to an embodiment of an edge system according to the invention; and
- FIG 2: another schematic block diagram according to an embodiment of a visualization of the edge system according to the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

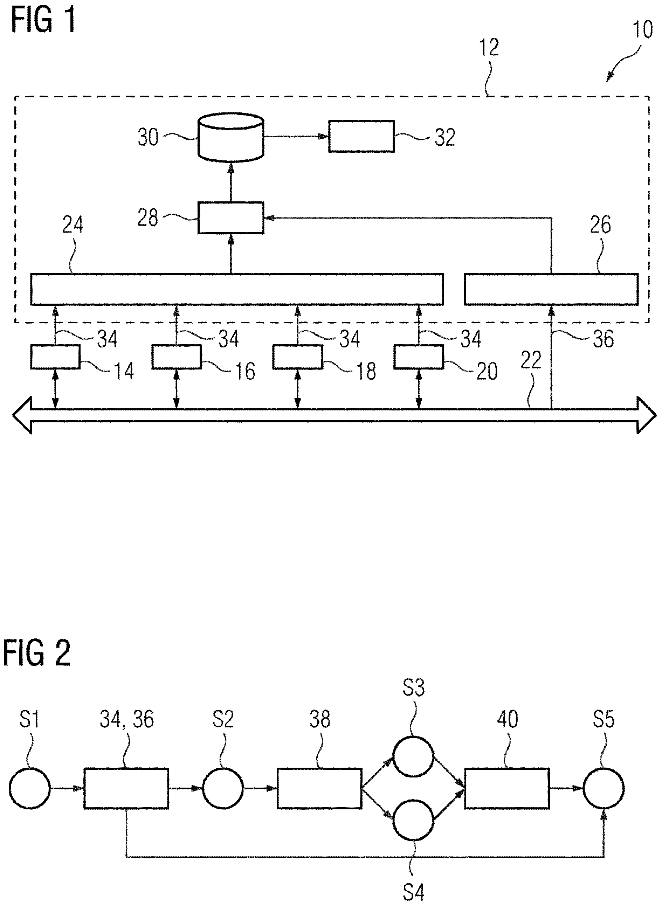

FIG 1 shows a schematic block diagram according to an embodiment of an edge system 10 according to the invention. The edge system 10 comprises at least one electronic computing device 12. Furthermore, the edge system 10 comprises at least two edge devices 14, 16, 18, 20. In particular, in the shown embodiment the edge system 10 comprises four edge devices 14, 16, 18, 20. The edge devices 14, 16, 18, 20 may communicate via a communication bus 22 with each other. The communication bus 22 is in particular configured for a communication via an open network protocol, for example an MQTT protocol.

According to the shown embodiment the electronic computing device 12 may comprise a so-called application log to metrics semantic agent 24, as well as a bus event to metrics semantic agent 26. Furthermore, a collecting module 28, a storage device 30, as well as an analyzation tool 32 is shown.

According to the shown embodiment a method for monitoring a communication between the at least two edge devices 14, 16, 18, 20 via the open network protocol by the electronic computing device 12 is provided. A communication information 34, 36 is received by the electronic computing device 12. The communication information 34, 36 is analyzed depending on a context of the communication information 34, 36 by the electronic computing device 12. The communication information 34, 36 is enriched with semantic data depending on a context of the communication information 34, 36 on the analyzation by the electronic computing device 12 and the enriched communication information 34, 36 is transmitted to a storage device 30 of the edge system 10.

In particular, as shown in FIG 1, at least one application log 34 of one of the edge device 14, 16, 18, 20 as the communication information 34, 36 is received. In addition or alternatively, at least one message bus event 36 of the open network protocol as the communication information 34, 36 is received. Furthermore, the communication information may be analyzed regarding to at least one error of the communication. For example, a type of error and/or an origin of the error and/or a number of errors are determined as the analyzation.

Furthermore, the communication information 34, 36 is analyzed with regard to an identification of the edge devices 14, 16, 18, 20. Furthermore, the communication information 34, 36 may be analyzed concerning an amount of communication between the at least two edge devices 14, 16, 18, 20. Additionally, the communication information 34, 36 may be structured.

In particular FIG 1 shows that the method is a non-intrusive method and does not require changes in the application code. It leverages data from existing sources, mainly application logs 34 and message bus events 36. Non-intrusiveness is achieved through special semantic agents that continuously scan the application logs 34 and for example the MQTT bus events. These agents calculate meaningful data, for example what and how many errors/warnings are generated, who talks to whom and how much, and enrich the data with context, in particular, semantics that links the different telemetry streams before storing the data in the storage device 30 for later visualization and analysis. There is on-demand activation and deactivation of telemetry level of detail at runtime providing greater flexibility for users. Automation is provided for identifying issues and possible root causes.

FIG 2 shows a schematic flow chart according to an embodiment of the method. In particular, FIG 2 shows in a first step S1 0 errors is provided. After that, the raw data, which is in particular the communication information 34, 36 are provided and in a second step S2 a preprocessing of the error is provided. For example, a historical view of a number of errors is provided. After that, data is cleaned to provide clean data 36. For example, an anomaly detection which may not cope with the publisher data rate is used. After that a third step S3 may be provided, which uses an anomaly detection, in particular with error recorded in anomaly detection. Alternatively, a fourth step S4 may be provided, if no error occurred. After that, data insights 40 may be used. With the data insights 40, a cloud connector may record the errors in the cloud, in particular originating from the anomaly detection. The cloud connector may also use the raw data 34 from the communication information 34, 36.

In particular, FIG 2 shows the solution features of a user-friendly user interface that focus on live and historical inter-application communication views, in which the MQTT concepts, such as the MQTT topics are first-class citizens. The solution focuses on relevant data for debugging, preserving context, when switching between graphs, logs, metrics, and other tools.

### List of References

- 10: edge device
- 12: electronic computing device
- 14: edge device
- 16: edge device
- 18: edge device
- 20: edge device
- 22: communication bus
- 24: application log to metrics semantic agent
- 26: bus event to metrics semantic agent
- 28: collector
- 30: storage device
- 32: analyzation tool
- 34: application log
- 36: message bus event
- 38: clean data
- 40: data insights
- S1 - S5: steps of the method

## Claims

1. A method for monitoring a communication between at least two edge devices (14, 16, 18, 20) of an edge system (10) via an open network protocol by an electronic computing device (12) of the edge system (10), comprising the steps of:
- receiving a communication information (34, 36) of the communication between the at least two edge devices (14, 16, 18, 20) by the electronic computing device (12);
- analyzing the communication information (34, 36) depending on a context of the communication information (34, 36) by the electronic computing device (12);
- enriching the communication information (34, 36) with semantic data depending on the analyzation by the electronic computing device (12); and
- transmitting the enriched communication information (34, 36) to a storage device (30) of the edge system (10).

2. A method according to claim 1, wherein
at least one application log (34) of one of the edge devices (14, 16, 18, 20) as the communication information (34, 36) is received.

3. A method according to claim 1 or 2, wherein
at least one message bus event (36) of the open network protocol as the communication information (34, 36) is received.

4. A method according to any one of claims 1 to 3, wherein
the open network protocol is provided as an MQTT network.

5. The method according to any one of claims 1 to 4, wherein
the communication information (34, 36) is analyzed with regards to at least one error of the communication.

6. The method according to claim 5, wherein
a type of error is determined as the analyzation.

7. The method according to claim 5 or 6, wherein
an origin of the error is determined as the analyzation.

8. The method according to any one of claims 5 to 7, wherein
a number of errors is determined as the analyzation.

9. The method according to any one of claims 1 to 8, wherein
the communication information is analyzed regarding to an identification of the edge devices (14, 16, 18, 20) of the communication.

10. The method according to any one of claims 1 to 9, wherein
the communication information is analyzed concerning of an amount of communication between the at least two edge devices (14, 16, 18, 20) of the communication.

11. The method according to any one of claims 1 to 10, wherein
additionally the communication information (34, 36) is structured.

12. A computer program product comprising program code means for performing a method according to any one of claims 1 to 11.

13. A computer-readable storage medium comprising at least the computer program product according to claim 12.

14. An electronic computing device (12) for monitoring a communication between at least two edge devices (14, 16, 18, 20) of an edge system (10) via an open network protocol, wherein the electronic computing device (12) is configured for performing a method according to any one of claims 1 to 11.

15. An edge system (10), comprising at least two edge devices (14, 16, 18, 20), one storing device (30), and at least one electronic computing device (12) according to claim 14.
